# EUROPEAN PATENT APPLICATION

(11) **EP 1 607 734 A1**
(43) Date of publication of application: **21.12.2005**
(21) Application number: 04717243.2
(22) Date of filing: 04.03.2004
(51) Int. Cl.: G01N 15/08

(54) **METHOD AND DEVICE FOR INSPECTING HONEYCOMB STRUCTURE**

(30) Priority: 25.03.2003 JP 2003082160
(71) Applicant: NGK INSULATORS, LTD., Nagoya-City, Aichi Pref. 467-8530 (JP)
(72) Inventor: MIYASHITA, Koichi, Nagoya-shi, Aichi 4678530 (JP); MORI, Shinya;, Nagoya-shi, Aichi 4678530 (JP)
(74) Representative: Paget, Hugh Charles Edward
(86) International application number: PCT/JP2004/002703
(87) International publication number: WO 2004/086007

(57) **Abstract**

A method and a device for inspecting a honeycomb structure having porous partition walls (2) disposed so as to form a plurality of flow passages (3a) and (3b) passed through the honeycomb structure from one end face (42) to the other end face (44), the device comprising a water particle generating part (11) generating water particles (10), a water particle lead-in part (12) leading the water particles (10) into the plurality of flow passages (3a), and a discharged particle measuring part (13) measuring the particle size distribution and the quantity of particles of the water particles (10) discharged from the plurality of flow passages (3b). By the device and method, the honeycomb structure can be easily inspected for presence or absence of defects, sizes of defects, quantity of defects, and the sizes and quantity of pits, and a post-treatment can also be easily performed.

## Description

### TECHNICAL FIELD

The present invention pertains to an inspection method and an inspection device for inspecting a honeycomb structure including porous partition walls. More particularly, the present invention pertains to an inspection method and an inspection device capable of easily inspecting the size and number of defects in addition to its presence or absence as well, and the size and number of pores in the porous partition walls with an easier post-treatment.

### BACKGROUND ART

Honeycomb structures are widely used as filters and catalyst carriers, such as exhaust gas purification devices for heat engines such as internal combustion engines and combustion equipment such as boilers, liquid fuel or gaseous fuel reforming devices, and water and sewage treatment devices. In particular, the honeycomb structures are suitably used as diesel particulate filters (hereinafter abbreviated as "DPF") used to trap and remove particulate matter contained in dust-containing fluid such as exhaust gas discharged from diesel engines, or high-temperature dust collecting devices.

The honeycomb structures used for such purposes trap and remove unnecessary particulate matter when a processing target fluid passes through pores in the porous partition walls, or make a catalyst supported on the surface of the porous partition wall or supported inside the pore to come in contact with a processing target fluid.

Therefore, if a large hole penetrating the porous partition wall exists, the detection of such a large hole is very important since the filtration performance or the catalyst support performance of the honeycomb structure is reduced. Also, when the honeycomb structure is used as a filter or the like, inspection of the size and the number of pores in the porous partition wall is important for determining the performance of the filter.

As a method for inspecting defects in a filter having such a structure, a method of inspecting pinholes in a partition wall by introducing a powder with a predetermined particle size and detecting the powder discharged from the filter using a particle counter has been proposed (e.g. JP-A-2000-193582). However, since the powder used in this method remains in the filter, the powder must be removed. In addition, since the powder is not discharged from the filter when there are no pinholes, this method cannot be used to inspect the pore size of the filter.

A method for detecting defects in an inspection target by introducing fine particles into the inspection target and detecting the discharged fine particles by visualizing the fine particles by irradiation with laser light has also been proposed (e.g. WO 02/082035). Although this method is effective for determining the position of the defect, it is difficult to inspect the number and size of defects.

### DISCLOSURE OF THE INVENTION

The present invention has been achieved in view of the above-described situation, and has an object of providing an inspection method and an inspection device capable of easily inspecting the size and the number of defects in a honeycomb structure, such as a large hole penetrating the partition wall, and the size and the number of pores in the partition wall, with an easier post-treatment.

The present invention provides an inspection method for inspecting a honeycomb structure including porous partition walls disposed to form a plurality of flow passages passing through the honeycomb structure from one end to the other end, the inspection method comprising: a water particle generating step of generating water particles; a water particle introducing step of introducing the water particles into the flow passages; and a discharged water particle measuring step of measuring a particle size distribution and a number of the water particles discharged from the flow passages.

In the present invention, it is preferable that the inspection method further comprise an introduced water particle measuring step of measuring a particle size distribution and a number of the water particles before the water particle introducing step. The water particles introduced in the water particle introducing step preferably have an average particle size of 3-100 µm, and the water particles introduced in the water particle introducing step preferably have a particle size of 1-300 µm. The honeycomb structure preferably includes the flow passages plugged at the one end and the flow passages plugged at the other end.

The present invention also provides an inspection device for inspecting a honeycomb structure including porous partition walls disposed to form a plurality of flow passages passing through the honeycomb structure from one end to the other end, the inspection device comprising: a water particle generating section which generates water particles; a water particle introducing section which introduces the water particles into the flow passages; and a discharged water particle measuring section which measures a particle size distribution and a number of the water particles discharged from the flow passages.

In the present invention, it is preferable that the inspection device further comprise an introduced water particle measuring section which measures a particle size distribution and a number of the water particles introduced into the flow passages. The water particle generating section preferably generates water particles with an average particle size of 3-100 µm, and preferably generates water particles with a particle size of 1-300 µm.

### BRIEF DESCRIPTION OF THE DRAWINGS

Fig. 1 is a cross-sectional schematic view showing an example of an inspection device according to the present invention.
Fig. 2(a) is an oblique view schematically showing an example of a honeycomb structure according to the present invention, and Fig. 2(b) is a partially enlarged view showing a section b shown in Fig. 2(a).
Fig. 3 is a graph showing an example of measurement results according to the present invention.
Fig. 4 is a graph showing another example of measurement results according to the present invention.
Fig. 5 is a graph showing an example of measurement results of the particle size distribution of water particles before being introduced into a filter according to the present invention.
Fig. 6 is a graph showing another example of measurement results according to the present invention.
Fig. 7 is a graph showing yet another example of measurement results according to the present invention.

### BEST MODE FOR CARRYING OUT THE INVENTION

The inspection method and the inspection device of the present invention are described below in detail based on specific embodiments, which, however, should not be construed as limiting the present invention.

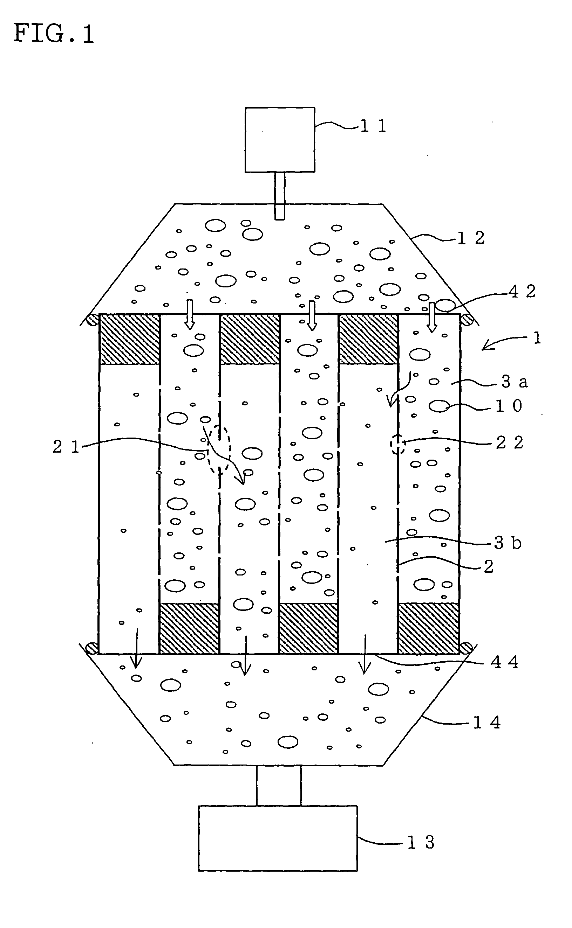

The inspection method of the present invention is described below using an example of inspecting a honeycomb structure 1 shown in Fig. 1, which includes porous partition walls 2 disposed to form a plurality of flow passages 3a and 3b passing through the honeycomb structure 1 from one end 42 to the other end 44, wherein the flow passages 3a and 3b being disposed adjacently with sandwiching the partition wall 2 are plugged at alternately at their end surfaces.

Water particles 10 having a specific average particle size and particle size distribution are generated, and introduced into the flow passages 3a open at the end 42 from the end 42 of the honeycomb structure 1. If a hole penetrating the partition wall 2, such as a large hole as a defect 21 or a minute pore 22 is formed in the partition wall 2, the introduced water particle 10 having such a size that the water particle 10 can pass through each hole passes from the flow passage 3a into the flow passage 3b through each hole and discharged from the end 44 through the flow passage 3b. When the size of the hole is as large as that of the defect 21, the number of discharged water particles increases and the number of water particles having a larger particle size also increases. When the partition wall has a large number of comparatively small pores, a large number of comparatively small water particles are discharged. A minute pore such as the pore 22 allows only minute water particles to be discharged.

Therefore, since the particle size distribution and the number of discharged water particles change depending on the pore size distribution and the number of pores in the partition wall, the presence or absence, size, and number of defects and the pore size distribution in the measurement target partition wall can be determined by measuring the particle size distribution and the number of water particles discharged from the flow passages.

By applying this method, preferably to all the partition walls of the honeycomb structure, the performance of the entire honeycomb structure can be easily determined in a short period of time. Moreover, since this method uses water particles, a post-treatment is facilitated or is not required at all. Accordingly, the method of the present invention is very useful for quality inspection for detecting a defective honeycomb structure. Moreover, water particles with an average particle size, particle size distribution, and concentration within an appropriate range for inspection of the honeycomb structure can be easily generated at low cost. Furthermore, since it is difficult to detect a defect in the partition wall by naked eye inspection from the outside of the honeycomb structure, the method of the present invention is particularly useful.

The particle size distribution to be measured is the index of the particle size. For example, the particle diameter distribution, volume distribution, weight distribution, and the like can be given as preferable indices. The number of particles need not be measured for all particles discharged. Usually, necessary information can be acquired by determining the number of particles per unit volume (concentration) discharged for a specific period of time.

Next, each step of the inspection method of the present invention is described. The water particle generating step is a step of generating water particles at a specific average particle size, particle size distribution, and concentration. The average particle size, particle size distribution, and concentration (number of particles per unit volume) of water particles generated can be suitably determined without specific limitations according to the anticipated pore size, pore size distribution, and number of pores in the porous material. The average particle size of water particles is preferably 3-300 µm when inspecting defects in a DPF honeycomb structure, and 3-100 µm when inspecting the pore size in a DPF honeycomb structure. The water particles preferably have a particle size of 1-300 µm (i.e. smallest particle size is 1 µm or greater and largest particle size is 300 µm or less). The concentration of water particles is preferably within the range of 1-1,000 cc/m³.

The water particle used in the present invention refers to a particle containing 50 wt% or more, preferably 70 wt% or more, and even more preferably 90 wt% or more of water. Although the water particle may contain other components, it is preferable that the water particle substantially contain only water, excluding impurities commonly contained, in view of easiness in post-treatment.

The water particle introduction step is a step of introducing a specific amount of water particles generated by the water particle generation step into specific flow passages. Although there are no specific limitations to the method of introducing the water particles, it is preferable to introduce the water particles at a specific concentration, pressure, and speed. Specific examples include a method of pressurizing the water particles at a specific pressure, a method of absorbing the water particles from the opposite end at a specific negative pressure, and the like. From the viewpoint of stability of the water particle size distribution and introduction speed, cost, and the like, the honeycomb structure is preferably disposed so that the longitudinal direction of the flow passage is the vertical direction as shown in Fig. 1, whereby the water particles fall from the top end spontaneously into the flow passages, or introduced into the flow passages by applying a specific pressure.

The discharged particle measuring step is a step of measuring the particle size distribution and the number of water particles discharged from the flow passages after passing through the hole in the partition wall. There are no specific limitations to the measurement method. Examples of the measurement method include a laser diffraction/scattering method, a dynamic light scattering method, a centrifugal sedimentation method, a gravity sedimentation method, an image processing method, an X-ray transmission method, and the like. The particle size distribution and the number of water particles can be measured using these methods.

In the measuring method of the present invention, the average particle size, particle size distribution, and concentration of the water particles introduced mainly depend on the generation conditions in the water particle generation step. However, these values may change due to a difference in the generation conditions, a change in the particle from generation to introduction, and the like. Therefore, the method of the present invention preferably comprises an introduced particle measuring step of measuring the particle size distribution and the number of water particles introduced, before the water particle introduction step. This enables the particle size distribution and the like of the water particles introduced to be accurately compared with the particle size distribution and the like of the water particles discharged. As the measuring method used in this step, it is preferable to use the method used in the discharged particle measuring step.

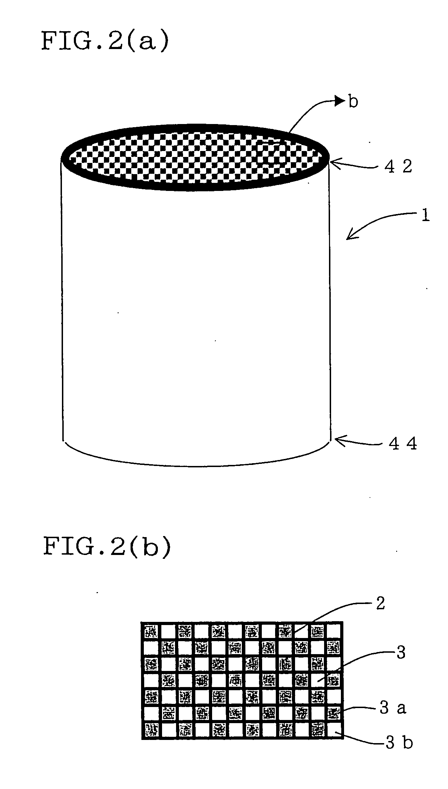

The honeycomb structure as the inspection target of the present invention, as shown in Fig. 2(a) and Fig. 2(b), is configured to include the porous partition walls 2 disposed to form a plurality of flow passages 3 passing from one end 42 to the other end 44. Preferably, specific flow passages 3b are plugged at the end 42 and the remaining flow passages 3a are plugged at the other end 44. Still more preferably, the flow passages separated by one partition wall are plugged at opposite ends. As long as this structure is used, there are no specific limitations to the material, size, form, and application. In general, an unplugged honeycomb structure is used as a catalyst carrier or the like, and a plugged honeycomb structure is used as a filter. The inspection according to the present invention may be applicable to an unplugged honeycomb structure by temporarily plugging specific flow passages thereof.

The inspection device of the present invention is described below with reference to Fig. 1. As examples of the water particle generating section 11 in the inspection device of the present invention, an atomization device such as an atomizer or nebulizer, a humidifier, or the like may be suitably used. These devices use ultrasonic waves or pressure. The average particle size, particle size distribution, and number of water particles generated may be appropriately changed by changing the water particle generation conditions, such as ultrasonic frequency or water flow rate in the case of an atomization device using ultrasonic waves, so that water particles with a desired average particle size, particle size distribution, and number of particles can be generated. A device which generates water particles with an average particle size of 3-100 µm is suitably used. It is preferable that the device generate water particles with a particle size of 1-300 µm.

The water particle introducing section 12 introduces water particles into specific flow passages. This section preferably connects the water generating section 11 with the specific flow passages, and more preferably with all the flow passages open at one end so that a leakage of water particles does not occur. The water particle introducing section may be equipped with a pressurization device. In order to cause the water particles to fall spontaneously into the flow passages, the water particle introducing section is preferably disposed on top of the honeycomb structure.

The discharged particle measuring section 13 measures the particle size distribution and the number of water particles discharged from specific flow passages. There are no specific limitations to the discharged particle measuring section 13 as long as the discharged particle measuring section 13 can measure the particle size distribution of water particles. As examples of the discharged particle measuring section 13, a laser diffraction/scattering type particle counter, centrifugal sedimentation or gravity precipitation type particle size distribution measuring device, image processing device, and the like can be given. The laser diffraction/scattering type particle counter is preferably used to measure water particles. In order to measure water particles which fall spontaneously from the honeycomb structure, the discharged particle measuring section 13 is preferably disposed under the honeycomb structure.

In order to accurately measure the particle size distribution of all water particles discharged from the flow passages, a discharged particle collection section 14 is preferably provided between the honeycomb structure 1 and the discharged particle measuring section 13. The discharged particle collection section 14 preferably connects all the flow passages discharging water particles with the discharged particle measuring section 13 so that a leakage of water particles does not occur.

In order to more accurately measure the particle size distribution and the number of water particles introduced, the inspection device preferably further includes an introduced particle measuring section (not shown). The introduced particle measuring section is preferably provided to the water particle introducing section 12. A device similar to the device used as the discharged particle measuring section 13 may be used as the introduced particle measuring section.

### (Examples)

The present invention is described below in more detail by examples. However, the present invention is not limited to the following examples. In the following examples, a cylinder-shaped DPF honeycomb structure (hereinafter abbreviated as "filter") with a diameter of 150 mm, a length of 150 mm, and a cell density (number of flow passages per unit cross-sectional area) of 40/cm² was used for evaluation.

### (Example 1)

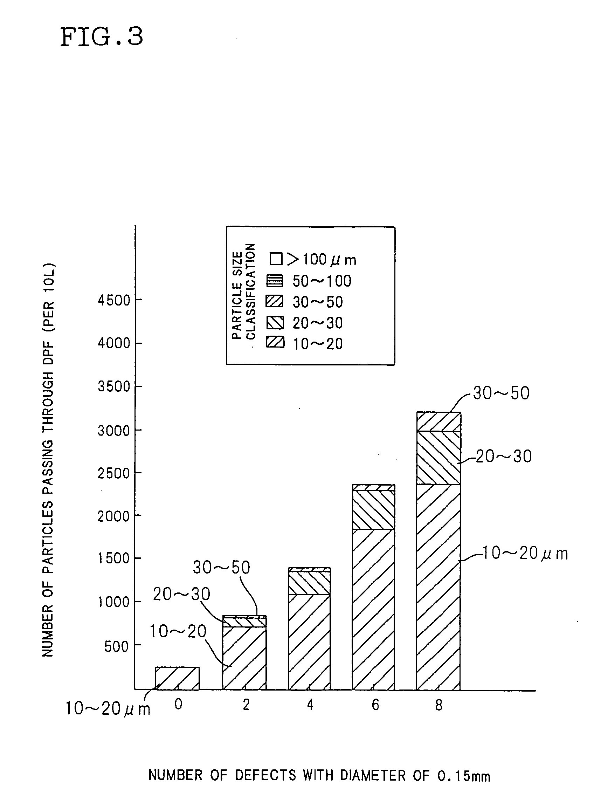

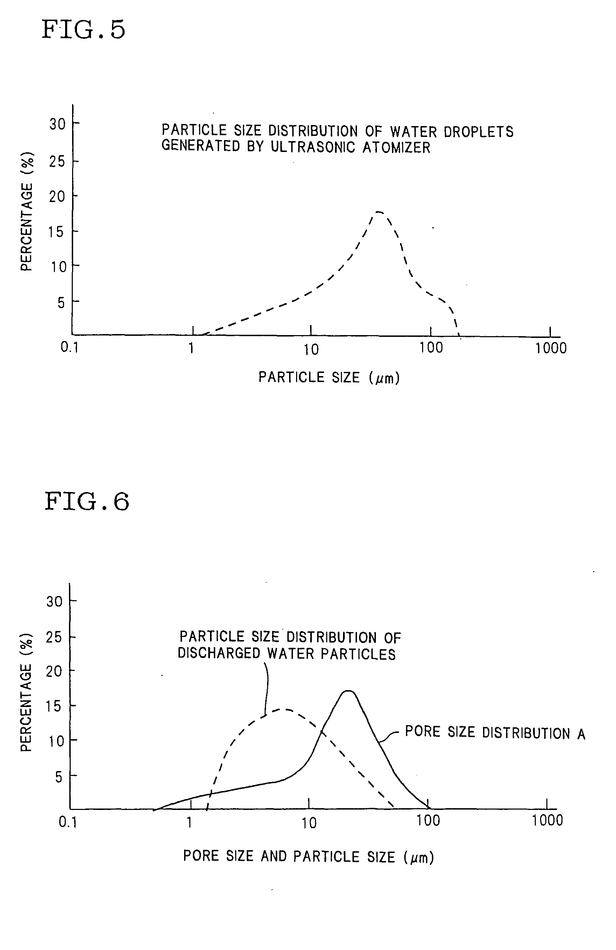

Five filters, each having 0, 2, 4, 6, and 8 defects with a diameter of 0.15 mm, respectively, were placed in the device shown in Fig. 1. Water particles having a specific average particle size, particle size distribution, and concentration as shown in Fig. 5 were generated using an ultrasonic atomizer, and introduced into the flow passages from the end 42. The particle size distribution and the number of discharged water particles were measured. The measurement results are shown in Fig. 3. An increase in the number of defects resulted in an increase in the number of discharged particles.

### (Example 2)

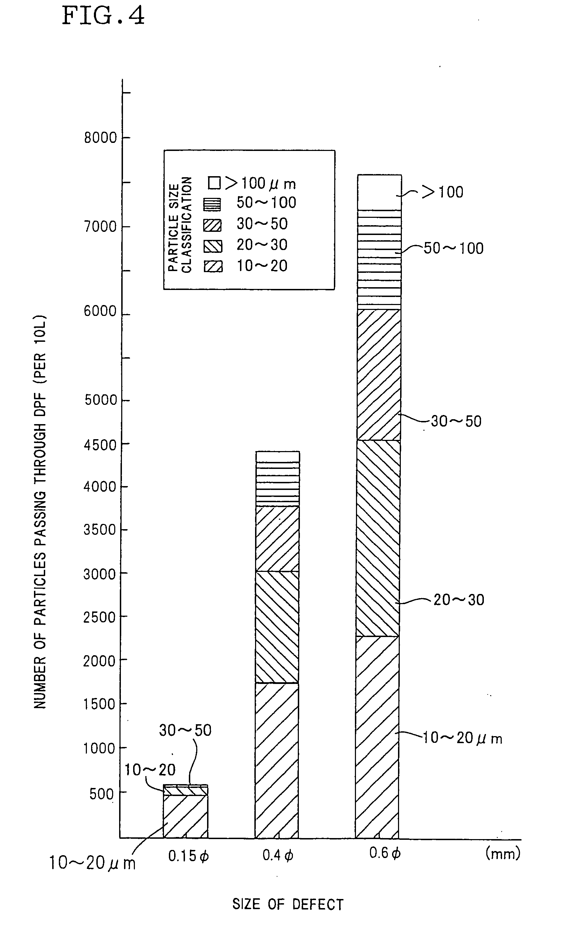

A filter having a defect with a diameter of 0.15 mm, a filter having a defect with a diameter of 0.4 mm, and a filter having a defect with a diameter of 0.6 mm were provided, and inspected in the same manner as in Example 1. The results are shown in Fig. 4. The number of discharged particles and the percentage of particles having a larger particle size were increased in comparison with Example 1 as the diameter of the defect was increased.

### (Example 3)

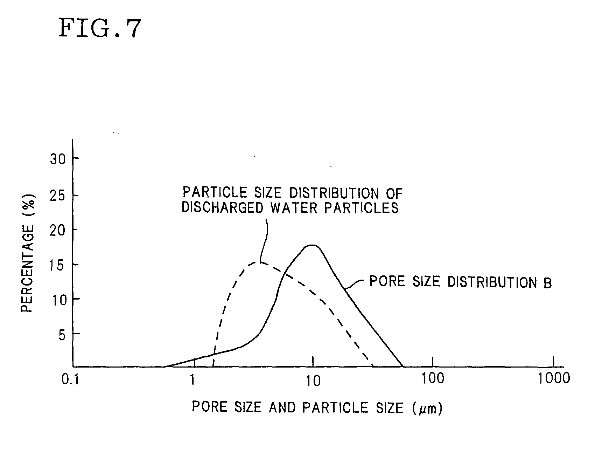

A filter having pores with a pore size shown by the pore size distribution A in Fig. 6 and a filter having pores with a pore size shown by the pore size distribution B in Fig. 7 were provided, and inspected in the same manner as in Example 1. The particle size distribution of water particles before being introduced into the filter was also measured. The particle size distribution of water particles before introduction is shown in Fig. 5. The particle size distribution of discharged water particles along with the pore size distribution of each inspected DPF are shown in Figs. 6 and 7. These figures show that a difference in pore size distribution caused the particle size distribution of the discharged water particles to change. Therefore, the pore size distribution of the filter can be estimated based on the particle size distribution of discharged water particles. A post-treatment after inspection was not required.

### INDUSTRIAL APPLICABILITY

As described above, according to the inspection method and the inspection device of the present invention, the presence or absence, size, and number of defects in a honeycomb structure and the size and number of pores in the honeycomb structure can be easily inspected without requiring a complicated post-treatment. Therefore, the inspection method and the inspection device of the present invention may be used for quality inspection of DPF honeycomb structures and the like.

## Claims

1. An inspection method for inspecting a honeycomb structure including porous partition walls disposed to form a plurality of flow passages passing through the honeycomb structure from one end to the other end, the inspection method comprising:
a water particle generating step of generating water particles;
a water particle introducing step of introducing the water particles into the flow passages; and
a discharged water particle measuring step of measuring a particle size distribution and a number of the water particles discharged from the flow passages.

2. The inspection method according to claim 1, further comprising an introduced particle measuring step of measuring a particle size distribution and a number of the water particles before the water particle introducing step.

3. The inspection method according to claim 1 or 2, wherein the water particles introduced in the water particle introducing step have an average particle size of 3-100 µm.

4. The inspection method according to any of claims 1-3, wherein the water particles introduced in the water particle introducing step have a particle size of 1-300 µm.

5. The inspection method according to any of claims 1-4, wherein the honeycomb structure includes the flow passages plugged at the one end and the flow passages plugged at the other end.

6. An inspection device for inspecting a honeycomb structure including porous partition walls disposed to form a plurality of flow passages passing through the honeycomb structure from one end to the other end, the inspection device comprising:
a water particle generating section which generates water particles;
a water particle introducing section which introduces the water particles into the flow passages; and
a discharged water particle measuring section which measures a particle size distribution and a number of the water particles discharged from the flow passages.

7. The inspection device according to claim 6, further comprising an introduced particle measuring section which measures a particle size distribution and a number of the water particles to be introduced into the flow passages.

8. The inspection device according to claim 6 or 7, wherein the water particle generating section generates water particles having an average particle size of 3-100 µm.

9. The inspection device according to any of claims 6-8, wherein the water particle generating section generates water particles having a particle size of 1-300 µm.
